# EUROPEAN PATENT SPECIFICATION

(11) **EP 2 056 189 B1**
(45) Date of publication and mention of the grant of the patent: **20.07.2016**
(21) Application number: 07791372.1
(22) Date of filing: 26.07.2007
(51) Int. Cl.: G06F 3/048, H04M 1/725

(54) **PORTABLE TERMINAL, FUNCTION LIST PROVIDING METHOD USED FOR THE SAME, AND ITS PROGRAM**
TRAGBARES ENDGERÄT, FUNKTIONSLISTEN-BEREITSTELLUNGSVERFAHREN DAFÜR UND PROGRAMM DAFÜR
TERMINAL PORTABLE, LISTE DE FONCTIONS FOURNISSANT UN PROCÉDÉ UTILISÉ POUR CELUI-CI, ET SON PROGRAMME

(30) Priority: 16.08.2006 JP 2006221740
(43) Date of publication of application: 06.05.2009
(73) Proprietor: NEC Corporation, Minato-ku Tokyo 108-8001 (JP)
(72) Inventor: KASHIMA, Miki, Tokyo 108-8001 (JP)
(74) Representative: Betten & Resch
(86) International application number: PCT/JP2007/064672
(87) International publication number: WO 2008/020537

(56) References cited:
- DE-A1- 10 313 115
- GB-A- 2 347 318
- JP-A- 07 049 674
- JP-A- 2004 102 609
- US-B1- 6 580 928

## Description

### Technical Field

This application claims priority from Japanese Patent Application No. 2006-221740, filed August 16, 2006.

The present invention relates to a portable terminal, a function list providing method used for the same, and its program and, more particularly, to a method of analyzing the user's tendency to use functions of a portable terminal, and providing a function list in which the functions are arranged in order of use frequency.

### Background Art

Recently, portable terminals such as a cell phone and PDA (Personal Digital Assistant) have many functions such as a camera function and schedule function, and include a user interface that allows a user to readily operate these functions (see, e.g., Japanese Patent Laid-Open No. 2005-229310).

Also, a method capable of selecting functions having high use frequencies and forming a user's original menu has been proposed for the portable terminals described above (see, e.g., Japanese Patent Laid-Open No. 2004-287702).

GB 2 347 318 A discloses a method of selecting the functions of a mobile phone with a memory. The method comprises the steps of firstly calculating the use frequency of each of the functions by counting the number of time at which each of the functions has been used for a given duration, storing the use frequency in the memory, sorting the functions according to the use frequencies by reading the memory upon entering a preset fuction selective key, displaying a predetermined number of the functions in order of descending use frequencies, and receiving an input for one of the displayed functions to be activated.

US 6,580,928 B1 discloses a handy phone which allows a user to call a function used in the past with a minimum of operation of buttons arranged on the phone.

DE 103 13 115 A1 discloses a method for customising the menu of a mobile phone using a hierarchical and menu-driven display. Specifically, the method arranges menu items according to their frequency of use in the menu hierarchy.

### Disclosure of Invention

### Problem to be Solved by the invention

In the conventional portable terminal described above, however, the user must register functions regarded as having high use frequencies. That is, the conventional portable terminal has the function of allowing the user to select functions having high use frequencies and form a user's original list, but cannot automatically provide a list corresponding to the use frequencies.

It is, therefore, an object of the present invention to solve the above problem, and provide a portable terminal capable of automatically forming a list corresponding to the use frequencies and simplifying the operation, a function list providing method used for the same, and its program.

### Means of Solution to the Problem

The present invention is defined in the independent claims. The dependent claims define advantageous embodiments.

A portable terminal according to the present invention includes a portable terminal main body which displays a plurality of functions of the terminal as a function list, collecting means for forming and saving a use log of the functions, and analyzing means for analyzing the use log and forming the function list.

A function list providing method according to the present invention includes the function list basic step of displaying a plurality of functions of a terminal as a function list, the collecting step of forming and saving a use log of the functions, and the analyzing step of analyzing the use log and forming the function list.

### Effect of the Invention

As explained above, the present invention forms a function use log and forms a function list by analyzing the use log, thereby achieving the superior effect that it is possible to automatically form a list corresponding to the use frequencies and simplify the operation.

### Brief Description of Drawings

Fig. 1 is a block diagram showing the arrangement of a portable terminal 1 according to the first exemplary embodiment of the present invention;
Fig. 2 is a flowchart showing a desired function list formation day/time zone registration process of the portable terminal 1 according to the first exemplary embodiment of the present invention;
Fig. 3 is a flowchart showing a function list formation/execution process of the portable terminal 1 according to the first exemplary embodiment of the present invention;
Fig. 4 is a view for explaining the function list formation/execution process in the portable terminal 1 of the first exemplary embodiment of the present invention;
Fig. 5 is a view for explaining the function list formation/execution process in the portable terminal 1 of the first exemplary embodiment of the present invention;
Fig. 6 is a block diagram showing the arrangement of a portable terminal 1a according to the second exemplary embodiment of the present invention;
Fig. 7 is a flowchart showing a desired function list formation day/time zone registration process of the portable terminal 1a according to the second exemplary embodiment of the present invention;
Fig. 8 is a view for explaining a function list formation/execution process in the portable terminal 1a of the second exemplary embodiment of the present invention;
Fig. 9 is a view for explaining the function list formation/execution process in the portable terminal 1a of the second exemplary embodiment of the present invention; and
Fig. 10 is a view for explaining the function list formation/execution process in the portable terminal 1a of the second exemplary embodiment of the present invention.

### Best Mode for Carrying Out the Invention

Exemplary embodiments of the present invention will be explained below with reference to the accompanying drawings.

### [First Exemplary Embodiment]

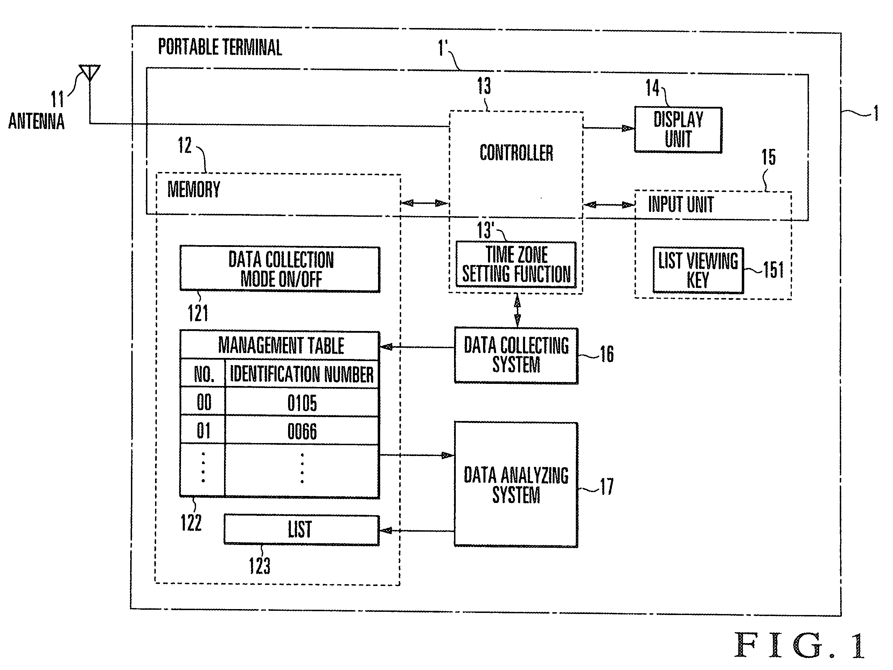

First, the first exemplary embodiment of the present invention will be explained. Fig. 1 is a block diagram showing the arrangement of a portable terminal according to the first exemplary embodiment. A portable terminal 1 of the first exemplary embodiment has a conventionally known portable terminal main body 1' including an antenna 11, memory 12, controller 13, display unit 14, and input unit 15. The portable terminal main body 1' (portable terminal 1) has, e.g., a calculator function, schedule function, and camera function (see Japanese Patent Laid-Open Nos. 2002-101181, 2004-178363, 2004-287702, 2004-348217, and 2005-229310). Also, the portable terminal main body 1' displays, on the display unit 14, a plurality of functions of the terminal as a function list under the control of the controller 13.

In addition, the portable terminal 1 according to the first exemplary embodiment includes a data collecting system 16 and data analyzing system 17. Furthermore, in the portable terminal 1 according to the first exemplary embodiment, the controller 13 has a time zone setting function 13', and the input unit 15 has a list viewing key 151. The portable terminal 1 also forms a data collection mode (ON/OFF) 121, management table 122, and list (function list) 123 in the memory 12. Note that the time zone setting function 13' and list viewing key 151 are not always necessary.

Each functional block in the portable terminal 1 operates as follows. First, when the user selects a desired function from the function list of the portable terminal main body 1' (portable terminal 1), which is displayed on the display unit 14 of the portable terminal main body 1', a selection instruction is input from the input unit 15 by this operation. The controller 13 having received this input selection instruction executes the function desired by the user on the basis of the selection instruction input from the input unit 15. The user can confirm that the operation is executed under the control of the controller 13, from the state displayed on the display unit 14.

The portable terminal main body 1' (portable terminal 1) is a communicable computer apparatus having, e.g., a CPU (including the controller 13), a memory (the memory 12), network connection devices (the controller 13 and antenna 11), and a data input/output device, and achieves the functions described above and to be described later by the CPU that operates on the basis of a program loaded into a main memory. The program is provided as it is stored in a predetermined storage medium, and can be supplied to the memory of the portable terminal 1 by the data input/output device or network connection devices of the portable terminal main body 1'.

When the user selects a function in the portable terminal 1 of the present invention as described above, the data collecting system 16 collects an identification number assigned to the selected function, and registers the collected identification number in the management table 122, thereby storing the identification number in the memory 12. For example, when the user operates the input unit 15 to input an instruction, an identification number assigned to the selected function is generated and transmitted from the input unit 15 to the controller 13, and the controller 13 having received the identification number executes the corresponding function. The data collecting system 16 collects the identification numbers thus transmitted, and registers them in the management table 122. If, for example, a predetermined time zone is set by the time zone setting function 13' of the controller 13, the data collecting system 16 performs the above-mentioned collection in the set time zone.

When the data collecting system 16 collects the identification numbers and registers them in the management table 122 as described above, the data analyzing system 17 analyzes the collected and registered data, and forms the list 123 in descending order of use frequency such that if there are functions (identification numbers) having the same use frequency, a function used more recently is ranked higher. The display unit 14 displays the contents of the list 123 thus formed under the control of the controller 13.

For example, when the user operates the list viewing key 151 assigned to the input unit 15, a function list display instruction is input to the portable terminal main body 1'. The controller 13 having received this instruction operates to display the contents of the list 123 on the display unit 14 so that the user can view the contents. When the user selects a desired function from the list 123 thus displayed on the display 14, the desired function is executed under the control of the controller 13 as described previously.

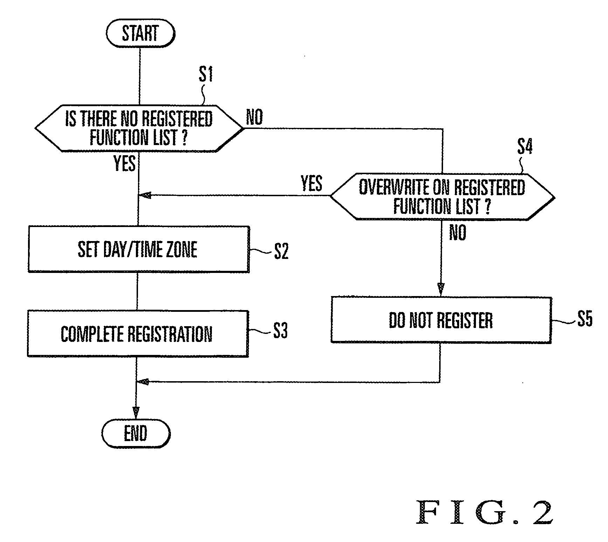

Fig. 2 is a flowchart showing a desired function list formation day/time zone registration process performed by the time zone setting function 13' of the controller 13 of the portable terminal 1 according to the first exemplary embodiment of the present invention. The desired function list formation day/time zone registration process performed by the portable terminal 1 will be explained below with reference to Figs. 1 and 2. Note that the process shown in Fig. 2 is implemented by the CPU by executing the program stored in the memory as described previously. This program allows the portable terminal 1 that displays a plurality of functions of the terminal as a function list to achieve a collecting function of forming and saving a function use log, and an analyzing function of forming the function list by analyzing the use log.

First, the time zone setting function 13' of the controller 13 of the portable terminal 1 checks the presence/absence of registration of a function list formation request, and determines whether a new function list can be registered (step S1 in Fig. 2). If the function list can be registered, the time zone setting function 13' of the controller 13 sets the list formation day/time zone desired by the user (step S2 in Fig. 2), and completes the registration by saving the set contents in the memory 12 (step S3 in Fig. 2). The list formation day/time zone desired by the user is input to the portable terminal 1 by the user.

If the function list exists, the time zone setting function 13' of the controller 13 determines whether to overwrite the function list on the registered list (step S4 in Fig. 2). If the function list is to be overwritten on the existing list, the time zone setting function 13' of the controller 13 returns to step S1. If the function list is not to be overwritten on the existing list, the time zone setting function 13' of the controller 13 does not register the new function list (step S5 in Fig. 2), and terminates the process.

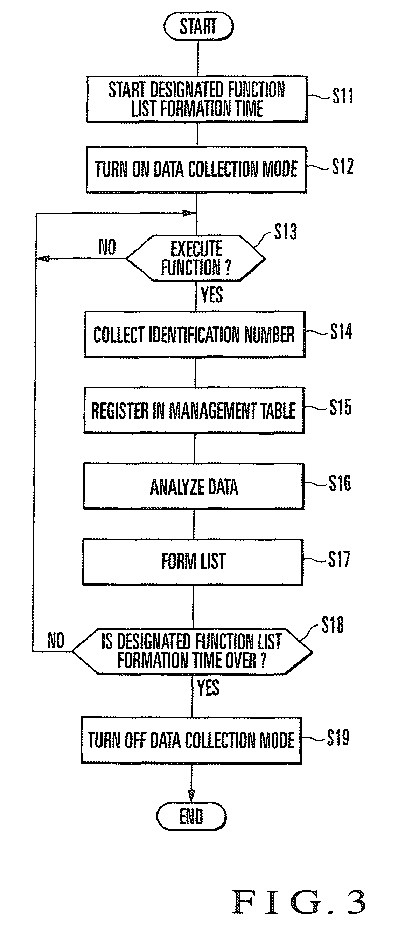

Fig. 3 is a flowchart showing a function list formation/execution process of the portable terminal 1 according to the first exemplary embodiment of the present invention. The function list formation/execution process performed by the portable terminal 1 will be explained below with reference to Figs. 1 and 3. Note that the process shown in Fig. 3 is implemented by the CPU by executing the program stored in the memory as described earlier.

When the designated list formation day/time registered in step S3 of Fig. 2 has come in the portable terminal 1 (step S11 in Fig. 3), the time zone setting function 13' of the controller 13 automatically turns on the data collection mode 121 (step S12 in Fig. 3). The data collection mode 121 is, e.g., a flag indicating the state of data collection. When the registered designated list formation day/time has come, the time zone setting function 13' sets a flag indicating the data collection mode (turns on the data collection mode 121) in the memory 12. As will be described later, when the flag indicating the data collection mode is ON, the data collecting system 16 and data analyzing system 17 perform predetermined operations.

In the data collection mode as described above, the user inputs an arbitrary function execution instruction, and the controller 13 executes the arbitrary function corresponding to the instruction input by the user (step S13 in Fig. 3). First, the data collecting system 16 collects an identification number assigned to the function (step S14 in Fig. 3), and registers the collected data in the management table 122 (step S15 in Fig. 3). Then, the data analyzing system 17 analyzes the data registered in the memory 12 (step S16 in Fig. 3), and forms the list 123 (step S17 in Fig. 3).

After that, if the time zone setting function 13' determines that the designated list formation time is over (step S18 in Fig. 3), the time zone setting function 13' automatically turns off the data collection mode 121 (step S19 in Fig. 3). Accordingly, the data collecting system 16 stops the collecting operation and terminates the above process. Note that the operations in steps S13 to S17 described above are continued and the list 123 is updated until the time zone setting function 13' determines that the designated list formation time is over (i.e., as long as the designated time is not over).

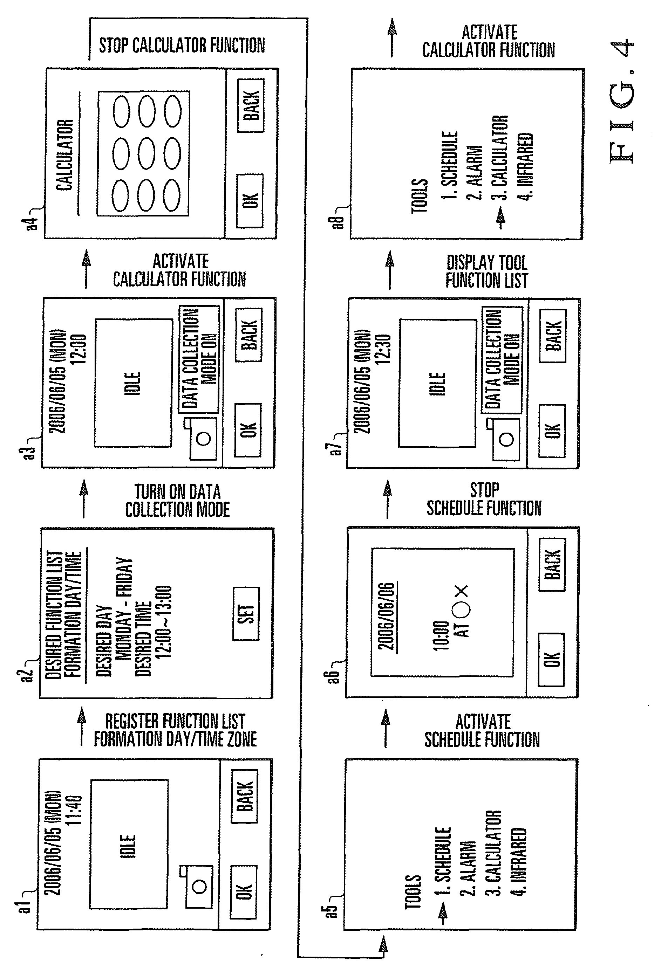

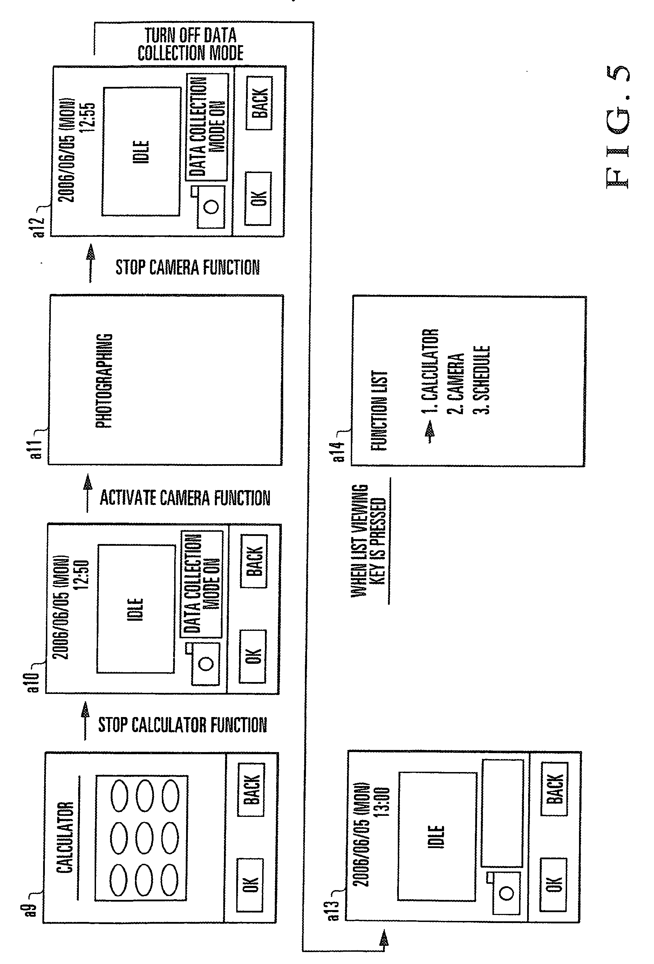

Figs. 4 and 5 are views for explaining the function list formation/execution process in the portable terminal 1 according to the first exemplary embodiment of the present invention. The function list formation/execution process in the portable terminal 1 will be explained below with reference to Figs. 1, 4, and 5.

For example, in the state in which a waiting image is displayed on the portable terminal 1 (a1 in Fig. 4), the user sets a desired function list formation day/time zone (Monday to Friday, 12:00 to 13:00) by operating the portable terminal 1 (a2 in Fig. 4). When Monday 12:00 as the desired list formation time has come, the portable terminal 1 automatically turns on the data collection mode (a3 in Fig. 4).

If the user uses an arbitrary function [in this example, the calculator function (a4 in Fig. 4)] in the above-mentioned state, the data collecting system 16 of the portable terminal 1 collects an identification number "004" assigned to the calculator function, and saves the number in the management table 122. In this case, the function is executed immediately after the data collection mode is set, so the management table 122 has one record containing the identification number "004". It is also possible to save a record containing, e.g., the execution date/time together with the identification number in the management table 122. The data analyzing system 17 forms the list 123 by analyzing the management table 122. Since the function is executed immediately after the data collection mode is set, the data analyzing system 17 forms the list 123 having one record containing the identification number "004".

Then, the user stops using the calculator function, the display returns to a tool list image (a5 in Fig. 4), and the user executes the schedule function (a6 in Fig. 4). In response to this input operation, the data collecting system 16 of the portable terminal 1 collects an identification number "006" assigned to the schedule function and saves (adds) the number in the management table 122. Also, the data analyzing system 17 analyzes the management table 122 and updates the list 123.

Then, if the user stops using the schedule function (a7 in Fig. 4) and selects the calculator function again (a9 in Fig. 5) from the tool list (a8 in Fig. 4), the data collecting system 16 of the portable terminal 1 collects the identification number "004" assigned to the calculator function and saves the number in the management table 122 in the same manner as above. In addition, the data analyzing system 17 analyzes the management table 122 and updates the list 123.

In this state, two records containing the identification number "004" and one record containing the identification number "006" are stored in the management table 122. Accordingly, the data analyzing system 17 updates the list 123 such that the function (calculator function) assigned the identification number "004" and having a high use frequency is given a high order, and the function (schedule function) assigned the identification number "006" and having a low use frequency is given a low order.

Then, the user stops using the calculator function, the display returns to the waiting image (also in Fig. 5), and the user uses the camera function (a11 in Fig. 5). In this case, the data collecting system 16 of the portable terminal 1 collects an identification number "011" assigned to the camera function and saves the number in the management table 122 as described above. After that, the data analyzing system 17 analyzes the management table 122 and updates the list 123.

In this state, two records containing the identification number "004", one record containing the identification number "006", and one record containing the identification number "011" are stored in the management table 122. Accordingly, the data analyzing system 17 updates the list 123 such that the function (calculator function) assigned the identification number "004" and having a high use frequency is given the highest order. Also, the data analyzing system 17 updates the list 123 such that although the identification numbers "006" and "011" have the same use frequency, the function (camera function) assigned the identification number "011" and used more recently is given a higher order.

Subsequently, when the user stops using the camera (a12 in Fig. 5) and 13:00 as the desired list formation end time has come, the time zone setting function 13' of the portable terminal 1 automatically turns off the data collection mode 121 (a13 in Fig. 5). The user can view the list 123 formed as described above any time by pressing the list viewing key 151 of the portable terminal 1 (a14 in Fig. 5). In the above-mentioned example, the calculator function that is used twice has the highest use frequency and is ranked in the highest position. Since the schedule function and camera function are each used once, the camera function used more recently is ranked higher than the schedule function (a14 in Fig. 5).

In the portable terminal of the present invention as explained above, while the user is using an arbitrary function on the terminal, the data collecting system acquires the function use log, and extracts data for analyzing the use tendency in the acquired function use log. The analyzing system analyzes the extracted data, and forms the function list.

The user can view the function list by pressing the list viewing key of the portable terminal, and can execute a function selected from the function list. Since this function list is automatically updated, it is possible to always present a function list matching the use status of the user, and execute a function having a high use frequency from the function list.

The conventional portable terminal has the function of allowing the user to select functions having high use frequencies and form a user's original menu, but does not have any system by which the portable terminal automatically provides a list corresponding to the use frequencies.

By contrast, the portable terminal 1 according to this exemplary embodiment forms the list 123 by collecting and analyzing data of the use log of those functions of the portable terminal 1 which are used by the user, and automatically updates the formed list 123. This allows the user to check and execute functions having high use frequencies in the list 123 in practical use. Consequently, the user of the portable terminal 1 according to this exemplary embodiment can simplify the operation.

### [Second Exemplary Embodiment]

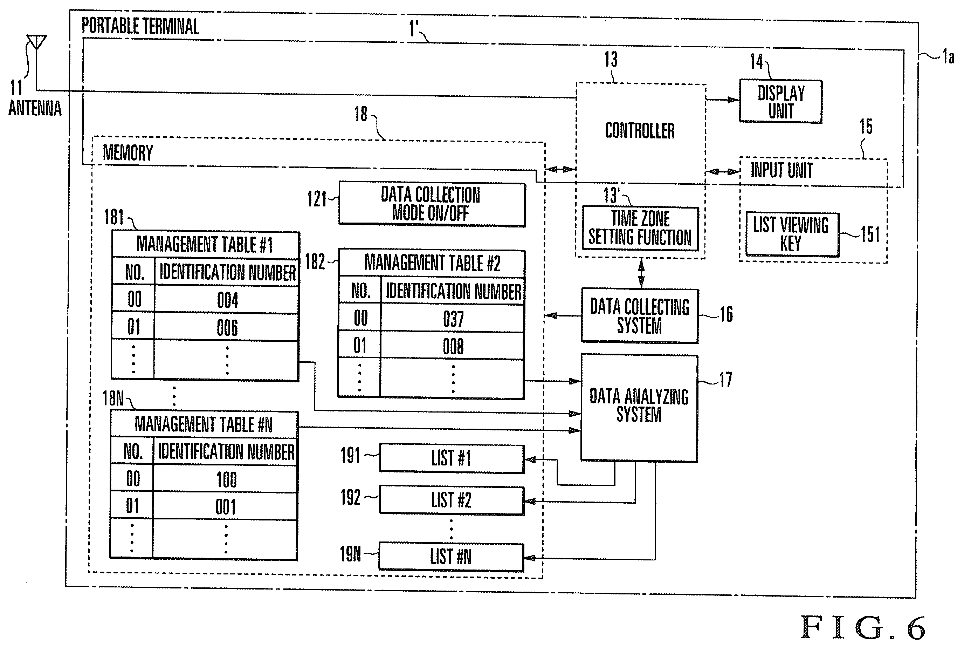

The second exemplary embodiment of the present invention will be explained below. Fig. 6 is a block diagram showing the arrangement of a portable terminal 1a according to the second exemplary embodiment of the present invention. Referring to Fig. 6, the portable terminal 1a of the second exemplary embodiment of the present invention newly has a memory 18 containing a plurality of management tables 181 to 18N and a plurality of lists 191 to 19N. The rest of the arrangement is the same as that of the portable terminal 1 according to the first exemplary embodiment of the present invention shown in Fig. 1, and the same reference numerals denote the same constituent elements.

The portable terminal 1 according to the first exemplary embodiment of the present invention described above has a list formed by the data (management table) extracted in the time (time zone) set by the user. In the second exemplary embodiment, however, the portable terminal 1a has the plurality of management tables 181 to 18N and the plurality of lists 191 to 19N for different use environments such as time zones, weekdays, and holidays.

Accordingly, the portable terminal 1a of the second exemplary embodiment has a data collection mode 121, the management tables (#1 to #N) 181 to 18N, and the lists (#1 to #N) 191 to 19N.

Note that the portable terminal 1a is also a communicable computer apparatus having, e.g., a CPU (including a controller 13), a memory (the memory 18), and network connection devices (the controller 13 and an antenna 11), and implements the functions described above and to be described later by the CPU that operates on the basis of a program loaded into a main memory.

In the portable terminal 1a having the arrangement as described above, when the day/time set by the user has come and a time zone setting function 13' of the controller 13 turns on the data collection mode 121, a data collecting system 16 collects an identification number assigned to the function used and registers the number in the management table (#1) 181. A data analyzing system 17 analyzes the management table and forms the list (#1) 191. If a plurality of desired data collection times are registered, the data collecting system 16 registers, in the management tables (#1 to #N) 181 to 18N, records containing identification numbers collected in accordance with the set time zones, and the data analyzing system 17 forms the lists (#1 to #N) 191 to 19N.

In the second exemplary embodiment, the data analyzing system 17 analyzes the collected data, and forms the lists (#1 to #N) 191 to 19N in descending order of use frequency such that if there are functions having the same use frequency, a function used more recently is ranked higher. In response to a function list display instruction from the user, the controller 13 (a portable terminal main body 1') selects, from the formed lists (#1 to #N) 191 to 19N, a function list corresponding to a time zone including the time at which the display instruction is received, and displays the contents of the selected list.

For example, when the user operates a list viewing key 151 allocated to an input unit 14, an instruction to display a corresponding function list is input to the portable terminal main body 1'. The controller 13 having received this instruction displays the contents of the corresponding function list on the display unit 14 so that the user can view the contents of the list. When the user selects a desired function from the function list thus displayed on the display unit 14, the desired function is executed under the control of the controller 13 as described previously.

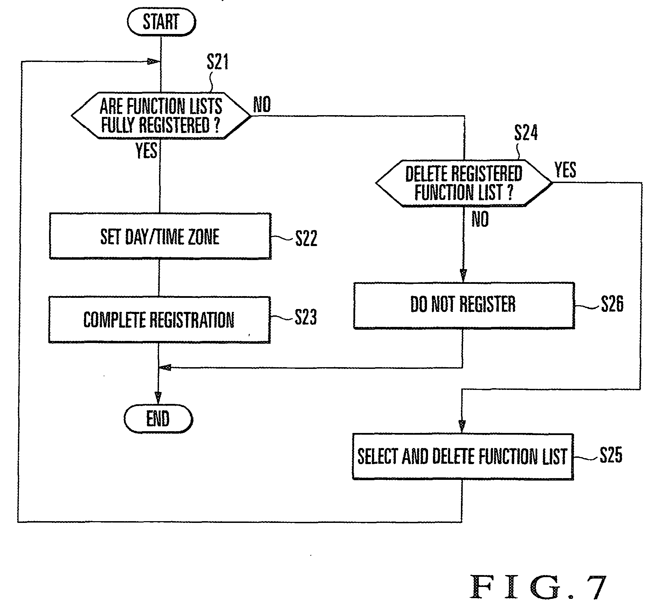

Fig. 7 is a flowchart showing a desired function list formation day/time zone registration process of the portable terminal 1a according to the second exemplary embodiment. The desired function list formation day/time zone registration process performed by the portable terminal 1a will be explained below with reference to Figs. 6 and 7. Note that the process shown in Fig. 7 is implemented by the CPU by executing the program stored in the memory as described previously.

First, the time zone setting function 13' of the controller 13 checks the number of registered lists of the portable terminal 1a, and determines whether a new list can be registered (step S21 in Fig. 7). If a new list can be registered, the time zone setting function 13' sets the list formation day/time zone desired by the user (step S22 in Fig. 7), and completes the registration by saving the set contents in the memory 18 (step S23 in Fig. 7).

If lists are fully registered, the time zone setting function 13' of the controller 13 determines whether to delete a registered list (step S24 in Fig. 7). If a registered list is to be deleted, the time zone setting function 13' selects a list to be deleted and deletes it (step S25 in Fig. 7), and returns to step S21. If no registered list is to be deleted, the time zone setting function 13' terminates the process without registering any new list (step S26 in Fig. 7).

Note that a function list formation/execution process of the portable terminal 1a according to the second exemplary embodiment of the present invention is the same as that of the portable terminal 1 according to the first exemplary embodiment of the present invention shown in Fig. 3, so a repetitive explanation will be omitted.

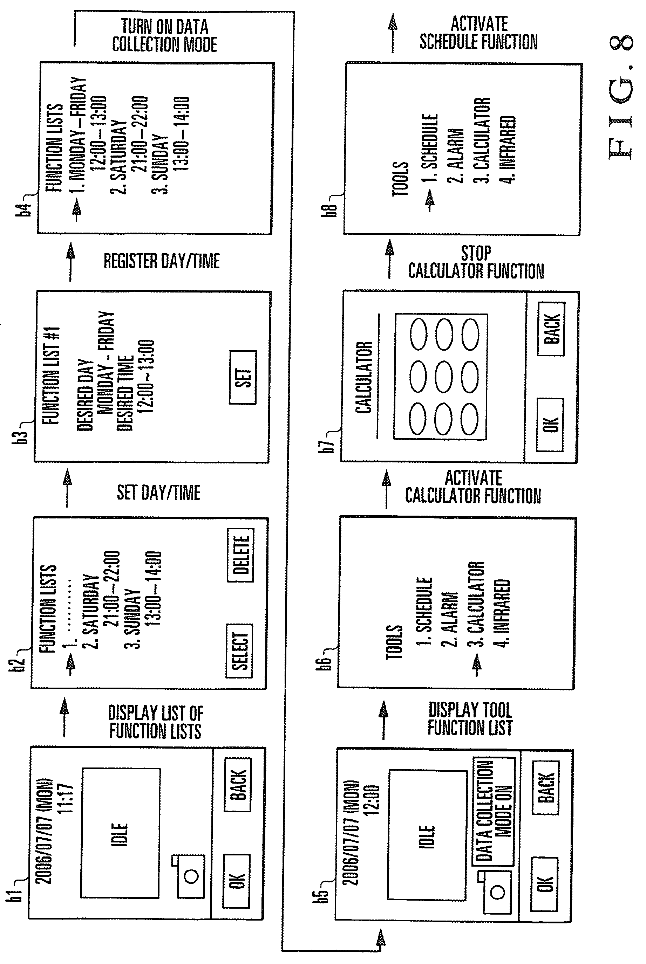

Figs. 8 to 10 are views for explaining the function list formation/execution process in the portable terminal 1a according to the second exemplary embodiment of the present invention. The function list formation/execution process in the portable terminal 1a will be explained below with reference to Figs. 6 and 8 to 10.

For example, in the state in which a waiting image is displayed on the portable terminal 1a (b1 in Fig. 8), the user operates the portable terminal 1a to display a function list (b2 in Fig. 8). The time zone setting function 13' of the portable terminal 1a sets a desired list formation day/time zone (Monday to Friday, 12:00 to 13:00) (b3 in Fig. 8), and adds the set day/time zone to the function list (b4 in Fig. 8). When Monday 12:00 as the desired list formation time has come, the time zone setting function 13' of the portable terminal 1a automatically turns on the data collection mode 121 (b5 in Fig. 8).

In the second exemplary embodiment, the display on the display unit 14 changes to a tool list image when the user uses an arbitrary function (b6 in Fig. 8). When the user uses the calculator function from this state (b7 in Fig. 8), the data collecting system 16 of the portable terminal 1a collects an identification number "004" assigned to the calculator function, and saves the number in the management table (#1) 181. Also, the data analyzing system 17 analyzes the management table (#1) 181 and forms the list (#1) 191.

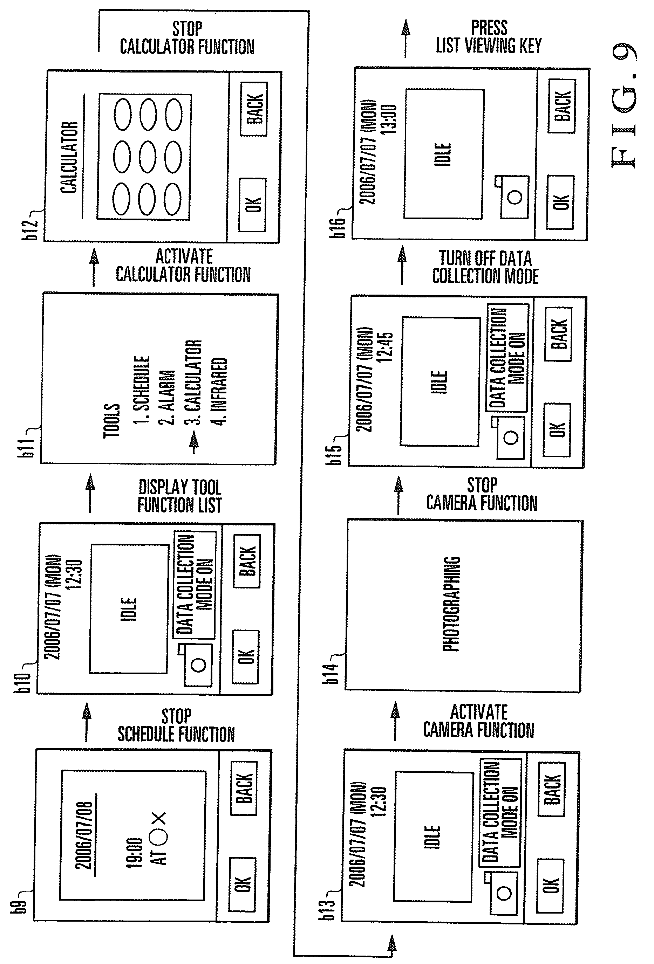

Then, when the user stops using the calculator function, the display returns to the tool list image again (b8 in Fig. 8). After that, the user executes the schedule function (b9 in Fig. 9). In response to this input operation, the data collecting system 16 of the portable terminal 1a collects an identification number "006" assigned to the schedule function and saves the number in the management table (#1) 181. Also, the data analyzing system 17 analyzes the management table (#1) 181 and updates the list (#1) 191.

Then, when the user stops using the schedule function (b10 in Fig. 9), the display returns to the tool list image again (b11 in Fig. 9). When the user uses the calculator function again after that (b12 in Fig. 9), the data collecting system 16 of the portable terminal 1a collects the identification number "004" assigned to the calculator function and saves the number in the management table (#1) 181. In addition, the data analyzing system 17 analyzes the management table (#1) 181 and updates the list (#1) 191.

Then, when the user stops using the calculator function, the display returns to the waiting image (b13 in Fig. 9). When the user uses the camera function after that (b14 in Fig. 9), the data collecting system 16 of the portable terminal 1a collects an identification number "011" assigned to the camera function and saves the number in the management table (#1) 181 as described above. Also, the data analyzing system 17 analyzes the management table (#1) 181 and updates the list (#1) 191.

Subsequently, when the user stops using the camera function (b15 in Fig. 9) and 13:00 as the desired list formation end time has come after that, the time zone setting function 13' of the portable terminal 1a automatically turns off the data collection mode 121 (b16 in Fig. 9).

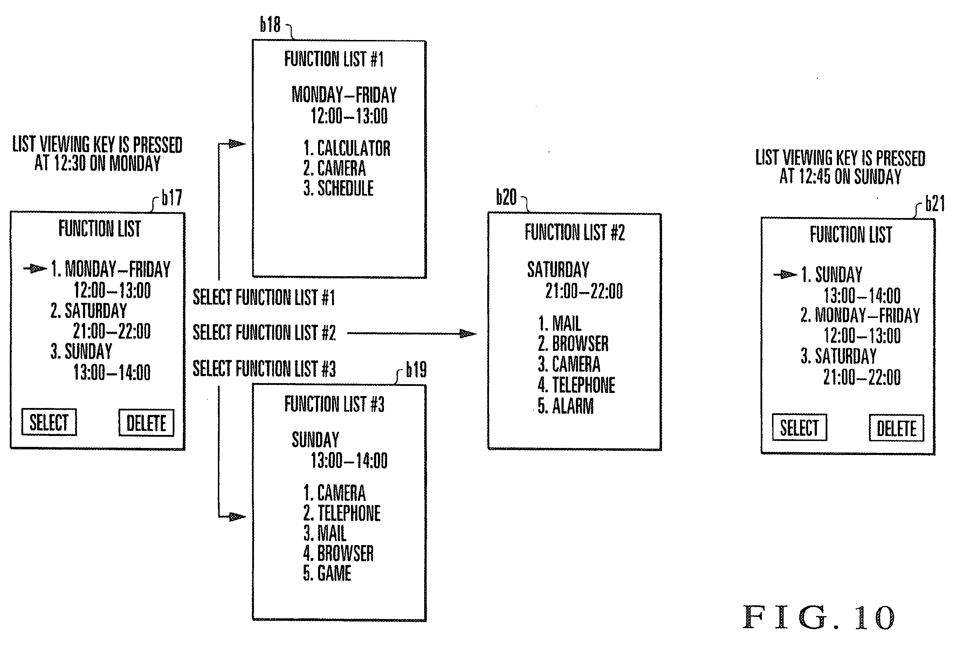

The user can view the list 123 formed as described above any time by pressing the list viewing key 151 of the portable terminal 1a (b17 in Fig. 10). When the list (#1) 191 (Monday to Friday, 12:00 to 13:00) registered beforehand is selected, the function list #1 is displayed (b18 in Fig. 10). In this case, the calculator function that is used twice has the highest use frequency and is ranked in the highest position. Since the schedule function and camera function are each used once, the camera function used more recently is ranked higher than the schedule function.

When the list (#2) 192 (Saturday, 21:00 to 23:00) in the function list (b17 in Fig. 10) is selected, the function list #2 is displayed (b19 in Fig. 10). When the list (#3) 193 (Sunday, 13:00 to 14:00) in the function list (b17 in Fig. 20) is selected, the function list #3 is displayed (b20 in Fig. 10). The user can directly execute functions from the function lists #1 to #3. Also, when the user presses the list viewing key 151 at 12:45 on Sunday, a list closest to the present day/time is displayed at the top (b21 in Fig. 10).

In the second exemplary embodiment as described above, the plurality of lists (#1 to #N) 191 to 19N are formed by collecting and analyzing the data of the use log of those functions of the portable terminal 1a which are used by the user, and automatically updated. This allows the user to confirm and execute functions having high use frequencies in the lists (#1 to #N) 191 to 19N in practical use. Consequently, the second exemplary embodiment can simplify user's operations even when setting the plurality of lists (#1 to #N) 191 to 19N.

### Industrial Applicability

The present invention is preferably used in a cell phone and the like.

## Claims

1. A portable terminal (1) comprising:
a portable terminal main body (1') adapted to display a plurality of functions of the terminal (1) as a function list,
collecting means (16) for forming and saving a use log (122) of the functions; and
analyzing means (17) for analyzing the use log (122) and forming the function list,
wherein said portable terminal (1) further comprises a time zone setting function (13') of setting an externally input time zone, wherein said collecting means (16) is adapted to form and to save a use log of the functions in the time zone set by the time zone setting function (13'),
wherein said analyzing means (17) is further adapted to save a plurality of function lists (191, 192, ..., 19N), and in response to a function list display instruction, said portable terminal main body (1') is further adapted to select, from the plurality of function lists (191, 192, ..., 19N), a function list corresponding to the time zone including the time at which the display instruction is received, and to display the selected function list,
wherein, when there is no function list corresponding to the time zone including the time at which the display instruction is received, said portable terminal main body (1') is further adapted to select a function list corresponding to the time zone being closest to the time at which the display instruction is received.

2. A portable terminal (1) according to claim 1, wherein said collecting means (16) is further adapted to collect identification numbers corresponding to the functions and generated when the functions are used, and to form the use log (122) on the basis of the collected identification numbers.

3. A portable terminal (1) according to any one of claims 1 to 2, wherein said analyzing means (17) is further adapted to form the function list by listing a function having a high use frequency in a high position.

4. A portable terminal according to any one of claims 1 to 3, wherein said analyzing means (17) is adapted to update the function list whenever said collecting means (16) forms the use log.

5. A function list providing method comprising:
the function list basic step of displaying a plurality of functions of a terminal as a function list;
the collecting step (S14, S15) of forming and saving a use log of the functions; and
the analyzing step (S16, S17) of analyzing the use log and forming the function list,
wherein said function list providing method further comprises a time zone setting function of setting an externally input time zone, wherein in the collecting step (S14, S15), a use log of the functions in the time zone set by the time zone setting function is formed and saved,
wherein a plurality of function lists are saved in the analyzing step (S16, S17), and in response to a function list display instruction, selecting, from the plurality of function lists, a function list corresponding to the time zone including the time at which the display instruction is received, and displaying the selected function list,
wherein, when there is no function list corresponding to the time zone including the time at which the display instruction is received, selecting a function list corresponding to the time zone being closest to the time at which the display instruction is received.

6. A function list providing method according to claim 5, wherein in the collecting step (S14, S15), identification numbers corresponding to the functions and generated when the functions are used are collected, and the use log is formed on the basis of the collected identification numbers.

7. A function list providing method according to any one of claims 5 to 6, wherein in the analyzing step (S16, S17), the function list is formed by listing a function having a high use frequency in a high position.

8. A function list providing method according to any one of claims 5 to 6, wherein in the analyzing step (S16, S17), the function list is updated whenever the use log is formed in the collecting step (S14, S15).

9. A computer-readable storage medium recording a program for causing a portable terminal (1) which displays a plurality of functions of the terminal as a function list to implement a method according to any of claims 5 to 8.

## Patentansprüche

1. Tragbares Endgerät (1), umfassend:
einen Hauptkörper des tragbaren Endgeräts (1'), welcher dazu ausgelegt ist, eine Mehrzahl von Funktionen des Endgeräts (1) als eine Funktionsliste anzuzeigen;
ein Sammelmittel (16) zum Bilden und Speichern eines Nutzungsprotokolls (122) der Funktionen; und
ein Analysemittel (17) zum Analysieren des Nutzungsprotokolls (122) und Bilden der Funktionsliste,
wobei das tragbare Endgerät (1) ferner eine Zeitzonen-Einstellfunktion (13') zum Einstellen einer extern eingegebenen Zeitzone umfasst, wobei das Sammelmittel (16) dazu ausgelegt ist, ein Nutzungsprotokoll der Funktionen in der durch die Zeitzonen-Einstellfunktion (13') eingestellten Zeitzone zu bilden und zu speichern,
wobei das Analysemittel (17) ferner dazu ausgelegt ist, eine Mehrzahl von Funktionslisten (191, 192, ..., 19N) zu speichern, und wobei in Antwort auf eine Funktionslisten-Anzeigeanweisung der Hauptkörper des tragbaren Endgeräts (1') ferner dazu ausgelegt ist, aus der Mehrzahl von Funktionslisten (191, 192, ..., 19N) eine Funktionsliste entsprechend der Zeitzone auszuwählen, welche die Zeit enthält, zu welcher die Anzeigeanweisung empfangen wurde, und die ausgewählte Funktionsliste anzuzeigen,
wobei, wenn keine Funktionsliste entsprechend der Zeitzone vorhanden ist, welche die Zeit enthält, zu welcher die Anzeigeanweisung empfangen wurde, der Hauptkörper des tragbaren Endgeräts (1') ferner dazu ausgelegt ist, eine Funktionsliste entsprechend der Zeitzone auszuwählen, welche am nächsten zu der Zeit ist, zu welcher die Anzeigeanweisung empfangen wurde.

2. Tragbares Endgerät (1) nach Anspruch 1, wobei das Sammelmittel (16) ferner dazu ausgelegt ist, Identifikationsnummern zu sammeln, die den Funktionen entsprechen und die erzeugt werden, wenn die Funktionen verwendet werden, und das Nutzungsprotokoll (122) auf der Basis der gesammelten Identifikationsnummern zu bilden.

3. Tragbares Endgerät (1) nach einem der Ansprüche 1 bis 2, wobei das Analysemittel (17) ferner dazu ausgelegt ist, die Funktionsliste durch Auflisten einer Funktion, welche eine hohe Nutzungsfrequenz aufweist, in einer hohen Position zu bilden.

4. Tragbares Endgerät nach einem der Ansprüche 1 bis 3, wobei das Analysemittel (17) dazu ausgelegt ist, die Funktionsliste zu aktualisieren, wann immer das Sammelmittel (16) das Nutzungsprotokoll bildet.

5. Funktionslisten-Bereitstellungsverfahren, umfassend:
den Funktionslisten-Grundschritt zum Anzeigen einer Mehrzahl von Funktionen eines Endgeräts als eine Funktionsliste;
den Sammelschritt (S14, S15) zum Bilden und Speichern eines Nutzungsprotokolls der Funktionen; und
den Analyseschritt (S16, S17) zum Analysieren des Nutzungsprotokolls und Bilden der Funktionsliste,
wobei das Funktionslisten-Bereitstellungsverfahren ferner eine Zeitzonen-Einstellfunktion zum Einstellen einer extern eingegebenen Zeitzone umfasst, wobei in dem Sammelschritt (S14, S15) ein Nutzungsprotokoll der Funktionen in der durch die Zeitzonen-Einstellfunktion eingestellten Zeitzone gesammelt und gespeichert wird,
wobei eine Mehrzahl von Funktionslisten in dem Analyseschritt (S16, S17) gespeichert werden und in Antwort auf eine Funktionslisten-Anzeigeanweisung aus der Mehrzahl von Funktionslisten eine Funktionsliste entsprechend der Zeitzone ausgewählt wird, welche die Zeit enthält, zu welcher die Anzeigeanweisung empfangen wurde, und die ausgewählte Funktionsliste angezeigt wird,
wobei, wenn keine Funktionsliste entsprechend der Zeitzone vorhanden ist, welche die Zeit enthält, zu welcher die Anzeigeanweisung empfangen wurde, eine Funktionsliste entsprechend der Zeitzone ausgewählt wird, die am nächsten an der Zeit ist, zu welcher die Anzeigeanweisung empfangen wurde.

6. Funktionslisten-Bereitstellungsverfahren nach Anspruch 5, wobei in dem Sammelschritt (S14, S15) Identifikationsnummern, die den Funktionen entsprechen und die erzeugt werden, wenn die Funktionen verwendet werden, gesammelt werden und das Nutzungsprotokoll auf der Basis der gesammelten Identifikationsnummern gebildet wird.

7. Funktionslistenbereitstellungsverfahren nach einem der Ansprüche 5 bis 6, wobei in dem Analyseschritt (S16, S17) die Funktionsliste durch Auflisten einer Funktion, welche eine hohe Nutzungsfrequenz aufweist, in einer hohen Position gebildet wird.

8. Funktionslistenbereitstellungsverfahren nach einem der Ansprüche 5 bis 6, wobei in dem Analyseschritt (S16, S17) die Funktionsliste aktualisiert wird, wann immer das Nutzungsprotokoll in dem Sammelschritt (S14, S15) gebildet wird.

9. Computerlesbares Speichermedium, welches ein Programm zum Veranlassen eines tragbaren Endgeräts (1), welches eine Mehrzahl von Funktionen des Endgeräts als eine Funktionsliste anzeigt, derart aufzeichnet, dass ein Verfahren nach einem der Ansprüche 5 bis 8 implementiert wird.

## Revendications

1. Terminal portable (1) comprenant:
un corps principal de terminal portable (1') adapté pour afficher une pluralité de fonctions du terminal (1) sous forme de liste de fonctions ;
un moyen de collecte (16) pour former et sauvegarder un journal d'utilisation (122) des fonctions ; et
un moyen d'analyse (17) pour analyser le journal d'utilisation (122) et former la liste de fonctions,
dans lequel ledit terminal portable (1) comprend en outre une fonction de réglage de fuseau horaire (13') consistant à régler un fuseau horaire entré en externe, dans lequel ledit moyen de collecte (16) est adapté pour former et pour sauvegarder un journal d'utilisation des fonctions dans le fuseau horaire réglé par la fonction de réglage de fuseau horaire (13'),
dans lequel ledit moyen d'analyse (17) est en outre adapté pour sauvegarder une pluralité de listes de fonctions (191, 192, ..., 19N), et en réponse à une instruction d'affichage de listes de fonctions, ledit corps principal de terminal portable (1') est en outre adapté pour sélectionner, parmi la pluralité de listes de fonctions (191, 192, ..., 19N), une liste de fonctions correspondant au fuseau horaire comportant l'heure à laquelle l'instruction d'affichage est reçue, et pour afficher la liste de fonctions sélectionnée,
dans lequel, lorsqu'il n'y a aucune liste de fonctions correspondant au fuseau horaire comportant l'heure à laquelle l'instruction d'affichage est reçue, ledit corps principal de terminal portable (1') est en outre adapté pour sélectionner une liste de fonctions correspondant au fuseau horaire le plus proche de l'heure à laquelle l'instruction d'affichage est reçue.

2. Terminal portable (1) selon la revendication 1, dans lequel ledit moyen de collecte (16) est en outre adapté pour collecter des numéros d'identification correspondant aux fonctions et générés lorsque les fonctions sont utilisées, et pour former le journal d'utilisation (122) sur la base des numéros d'identification collectés.

3. Terminal portable (1) selon l'une quelconque des revendications 1 à 2, dans lequel ledit moyen d'analyse (17) est en outre adapté pour former la liste de fonctions en listant une fonction ayant une haute fréquence d'utilisation dans une position haute.

4. Terminal portable selon l'une quelconque des revendications 1 à 3, dans lequel ledit moyen d'analyse (17) est adapté pour mettre à jour la liste de fonctions à chaque fois que ledit moyen de collecte (16) forme le journal d'utilisation.

5. Procédé de fourniture de liste de fonctions comprenant:
l'étape de base de liste de fonctions consistant à afficher une pluralité de fonctions d'un terminal sous forme de liste de fonctions ;
l'étape de collecte (S14, S15) consistant à former et sauvegarder un journal d'utilisation des fonctions; et
l'étape d'analyse (S16, S17) consistant à analyser le journal d'utilisation et former la liste de fonctions,
dans lequel ledit procédé de fourniture de liste de fonctions comprend en outre une fonction de réglage de fuseau horaire consistant à régler un fuseau horaire entré en externe, dans lequel à l'étape de collecte (S14, S15), un journal d'utilisation des fonctions dans le fuseau horaire réglé par la fonction de réglage de fuseau horaire est formé et sauvegardé,
dans lequel une pluralité de listes de fonctions sont sauvegardées à l'étape d'analyse (S16, S17), et en réponse à une instruction d'affichage de liste de fonctions, la sélection, parmi la pluralité de listes de fonctions, d'une liste de fonctions correspondant au fuseau horaire comportant l'heure à laquelle l'instruction d'affichage est reçue, et l'affichage de la liste de fonctions sélectionnée,
dans lequel, lorsqu'il n'y a aucune liste de fonctions correspondant au fuseau horaire comportant l'heure à laquelle l'instruction d'affichage est reçue, la sélection d'une liste de fonctions correspondant au fuseau horaire le plus proche de l'heure à laquelle l'instruction d'affichage est reçue.

6. Procédé de fourniture de liste de fonctions selon la revendication 5, dans lequel à l'étape de collecte (S14, S15), des numéros d'identification correspondant aux fonctions et générés lorsque les fonctions sont utilisées sont collectés, et le journal d'utilisation est formé sur la base des numéros d'identification collectés.

7. Procédé de fourniture de liste de fonctions selon l'une quelconque des revendications 5 à 6, dans lequel à l'étape d'analyse (S16, S17), la liste de fonctions est formée en listant une fonction ayant une haute fréquence d'utilisation élevée dans une position haute.

8. Procédé de fourniture de liste de fonctions selon l'une quelconque des revendications 5 à 6, dans lequel à l'étape d'analyse (S16, S17), la liste de fonctions est mise à jour à chaque fois que le journal d'utilisation est formé à l'étape de collecte (S14, S15).

9. Support de stockage lisible par ordinateur enregistrant un programme permettant d'amener un terminal portable (1) qui affiche une pluralité de fonctions du terminal sous forme de liste de fonctions à implémenter un procédé selon l'une quelconque des revendications 5 à 8.
